# EUROPÄISCHE PATENTSCHRIFT

(11) **EP 4 222 393 B1**
(45) Veröffentlichungstag und Bekanntmachung des Hinweises auf die Patenterteilung: **26.06.2024**
(21) Anmeldenummer: 21769920.6
(22) Anmeldetag: 25.08.2021
(51) Int. Cl.: F16H 63/34, F16H 61/36, F16H 61/28, F16H 61/32, F16H 61/12

(54) **AKTUATOR UND VORRICHTUNG ZUM EINLEGEN EINER PARKSPERRE EINES KRAFTFAHRZEUGAUTOMATIKGETRIEBES MIT EINEM DERARTIGEN AKTUATOR SOWIE EIN DAMIT AUSGESTATTETES KRAFTFAHRZEUG**
ACTUATOR, AND DEVICE FOR ENGAGING A PARKING LOCK OF A MOTOR-VEHICLE AUTOMATIC TRANSMISSION HAVING SUCH AN ACTUATOR, AND MOTOR VEHICLE EQUIPPED THEREWITH
ACTIONNEUR, ET DISPOSITIF POUR LA MISE EN PRISE D'UN FREIN DE STATIONNEMENT D'UNE TRANSMISSION AUTOMATIQUE DE VÉHICULE À MOTEUR AYANT UN TEL ACTIONNEUR, ET VÉHICULE À MOTEUR ÉQUIPÉ DE CELUI-CI

(30) Priorität: 01.10.2020 DE 102020125725
(43) Veröffentlichungstag der Anmeldung: 09.08.2023
(73) Patentinhaber: Küster Holding GmbH, 35630 Ehringshausen (DE)
(72) Erfinder: KELLER, Oliver, 56477 Nister-Möhrendorf (DE); EICHENAUER, Tobias, 35633 Lahnau (DE); HARTBROD, Kevin, 35633 Lahnau (DE)
(74) Vertreter: Weckenbrock, Matthias
(86) Internationale Anmeldenummer: PCT/EP2021/073454
(87) Internationale Veröffentlichungsnummer: WO 2022/069113

(56) Entgegenhaltungen:
- EP-A1- 3 225 887
- WO-A1-2017/182555
- DE-A1- 10 045 953
- DE-A1-102016 224 660
- DE-A1-102017 103 317

## Beschreibung

Die Erfindung betrifft einen Aktuator nach dem Oberbegriff des Patentanspruchs 1. Weiterhin betrifft die Erfindung eine Vorrichtung zum Einlegen einer Parksperre eines Kraftfahrzeugautomatikgetriebes gemäß Patentanspruch 15 sowie ein damit ausgestattetes Kraftfahrzeug gemäß Anspruch 16.

Der Einsatz von automatischen Schaltbetätigungen beziehungsweise Shiftby-Wire-Systemen in Kraftfahrzeugen bietet gegenüber mechanisch gekoppelten Schaltbetätigungen einige Vorteile. So können beispielsweise die Schaltstufen des Getriebes flexibel und in Abhängigkeit des Fahrzeugzustandes per Software gewählt werden. Auch das Aktivieren der Parksperre durch Einlegen der P-Stufe erfolgt hierbei nicht mehr manuell durch den Fahrer, sondern wird durch die Steuerungssoftware, zum Beispiel beim Anhalten oder beim Verlassen des Fahrzeuges, automatisch sichergestellt. Da ein Einlegen der P-Stufe zum Aktivieren der Parksperre vor dem Verlassen des Kraftfahrzeuges aus Sicherheitsgründen zwingend erforderlich ist, verfügen derartige Systeme und Aktuatoren über Notfallmechanismen, die auch bei Störungen des Aktuators oder bei Spannungsausfall ein Einlegen der P-Stufe gewährleisten sollen. Diese Notfallmechanismen arbeiten typischerweise mit Energiespeichern, wie zum Beispiel mechanischen Federelementen, welche unabhängig vom Aktuator etwa das Einlegen einer mechanischen Notposition sicherstellen.

Ein Aktuator nach dem Oberbegriff des Patentanspruchs 1 ist aus der DE 10 2011 014 815 A1 bekannt. Darin wird ein Kraftfahrzeugparksperrenaktuator mit zumindest einer Spindel beschrieben, bei dem aus einer rotatorischen Bewegung eines Motors eine Längsbewegung zum automatischen Schalten einer Getriebestufe realisiert wird. Die Notfallfunktion zum Einlegen der Parksperre wird hierbei durch ein Federelement realisiert, welches durch das Betätigen der Nichtparkstellung des Aktuators vorgespannt und durch eine Verrastung mechanisch gehalten wird. Eine Schaltfunktion zum Auslösen des Notfallmechanismus zum Einlegen der P-Stufe soll durch eine vom Aktuator unabhängige Spannungsquelle erfolgen. Nachteilig bei diesem Aktuator ist allerdings, dass zum Auslösen des Notfallmechanismus eine unabhängige Spannungsquelle benötigt wird. Daher kann die P-Stufe nicht eingelegt werden, wenn die unabhängige Spannungsquelle ebenfalls nicht zur Verfügung steht, was insbesondere dann vorkommen kann, wenn der Akkumulator des Kraftfahrzeuges entladen ist und auch keine sonstige Spannungsquelle, wie beispielsweise ein ordnungsgemäß funktionierender Generator zur Verfügung steht.

Weiterhin muss bei dem Aktuator der DE 10 2011 014 815 A1 zum Vorspannen des Federelementes die P-Stufe verlassen werden, wodurch eine ungewollte und unsichere Fahrzeugsituation entsteht, weil die P-Stufe des Getriebes verlassen wird, obwohl der Notfallmechanismus noch nicht zur Verfügung steht.

Aus der DE 100 45 953 B4 ist eine Parksperrvorrichtung bekannt, die insbesondere für ein mit einem automatisiert steuerbaren Getriebe versehenes Kraftfahrzeug vorgesehen ist. Die Parksperrvorrichtung weist eine Betätigungsvorrichtung auf, die ein Betätigungselement zur Betätigung einer Parksperre, einen Federspeicher zur Aktivierung der Parksperre, einen steuerbaren Stellantrieb zur Deaktivierung der Parksperre und eine Sperrvorrichtung zur Arretierung der Parksperre im deaktivierten Zustand umfasst. Der Stellantrieb ist elektromechanisch wirksam ausgebildet und mit einem Hauptbetätigungshebel verbunden. Der Federspeicher, der Stellantrieb und die Sperrvorrichtung sind über den Hauptbetätigungshebel mit dem Betätigungselement in Verbindung bzw. in Wirkverbindung bringbar.

Aus der WO 2017/182555 A1 ist ein Aktuator zum Einlegen einer Parksperre eines Kraftfahrzeugs eines Kraftfahrzeugautomatikgetriebes bekannt. Der Aktuator weist ein Federelement auf, welches die Funktion hat, beim Vorliegen einer Störung des Aktuators oder bei Spannungsausfall, die P-Stufe eines Automatikgetriebes einzulegen. Mittels einer elektrischen Haltemagneteinrichtung wird das unter Aufbau einer Rückstellkraft gespannte Federelement in seiner Position gehalten. Für eine gute magnetische Haltekraft ist eine möglichst plane Anlage zwischen einem mit dem Federelement verbundenen Magnetanker und dem eigentlichen Magneten erforderlich. Spalte oder auch eine unsymmetrische Krafteinleitung verringern die magnetische Haltekraft erheblich.

Die DE 10 2016 224 660 A1 betrifft eine Betätigungsanordnung für eine Parksperre für ein Kraftfahrzeug mit einem Stellantrieb mit Stellglied und Sperrschieber, der über eine Parksperrensteuerstrecke mit einer Parksperre koppelbar ist, sodass in seiner durch einen Anschlag definierten Einrückstellung ein Einlegen der Parksperre erlaubt und in seiner Ausrückstellung unterbunden ist. Ein Schwenkhebel ist sowohl an dem Stellglied als auch an dem Sperrschieber und zudem an einer weiteren Anlenkstelle relativ zur Basis schwenkbar gelagert, sodass mittels einer Verschiebung des Stellgliedes eine entsprechend hebelübersetzte Verschiebung des Sperrschiebers bewirkbar ist.

Auch aus der DE 10 2017 103 317 A1 ist eine Parksperre für ein Automatikgetriebe mit einem elektrischen Parksperrenaktuator bekannt.

Die EP 3 225 887 A1, auf welchem die zweiteilige Anspruchsfassung basiert, betrifft einen Aktuator zum Betätigen eines Fahrzeuggetriebes in verschiedene Schaltstellungen über ein lösbar damit verbundenes Antriebselement und eine automatische Gangschaltanordnung zum automatischen Einlegen einer bestimmten Gangschaltposition. Ausgehend von den zuvor beschriebenen Nachteilen liegt der Erfindung die Aufgabe zugrunde, einen Aktuator nach dem Oberbegriff des Patentanspruchs 1 derart weiterzubilden, dass in allen Situationen eine sichere und effiziente Funktion eines Notfallmechanismus zum Einlegen der P-Stufe gewährleistet ist. Ferner ist es Aufgabe der Erfindung, eine Vorrichtung zum Einlegen einer Parksperre eines Kraftfahrzeugautomatikgetriebes mit einem derartigen Aktuator sowie ein verbessertes Kraftfahrzeug zur Verfügung zu stellen.

Hinsichtlich des Aktuators wird diese Aufgabe gelöst durch einen Aktuator mit allen Merkmalen des Patentanspruchs 1. Bezüglich der Vorrichtung zum Einlegen einer Parksperre eines Kraftfahrzeugautomatikgetriebes wird die Aufgabe gelöst durch eine Vorrichtung mit allen Merkmalen des Patentanspruchs 15. Die Aufgabe wird ferner gelöst durch ein Kraftfahrzeug gemäß Anspruch 16. Vorteilhafte Ausgestaltungen der Erfindung finden sich in den Unteransprüchen.

Der erfindungsgemäße Aktuator weist dabei einen eine Antriebswelle antreibenden Antrieb sowie ein mit der Antriebswelle in Wirkverbindung stehendes erstes Betätigungselement zum Betätigen einer Schalteinrichtung auf. Ein Federelement stützt sich einerseits an einem Gehäusebauteil des Aktuators und anderseits an einem zum Spannen des Federelementes ausgebildeten zweiten Betätigungselement ab.

Das Federelement hat dabei die Funktion, beim Vorliegen einer Störung des Aktuators oder bei Spannungsausfall, die P-Stufe einzulegen.

Ferner weist der Aktuator eine elektromagnetische Halteeinrichtung mit einem Elektromagneten auf, welcher mit einem ferromagnetische Materialkomponenten aufweisenden Magnetanker zum Halten des unter Aufbau einer Rückstellkraft gespannten Federelements magnetisch wechselwirkt.

Die elektromagnetische Halteeinrichtung ist vorgesehen, um das unter Aufbau einer Rückstellkraft gespannte Federelement in seiner Position zu halten. Somit ist ein Spannen des Federelementes während des Einlegens verschiedener Schaltstufen aus der P-Stufe heraus nicht erforderlich, da dies schon vorab erfolgt ist.

Die Erfindung zeichnet sich nunmehr dadurch aus, dass der Magnetanker kipp- oder schwenkbar an einem bewegbaren Schwenkteil der Halteeinrichtung gelagert ist. Das Federelement oder die sogenannte Fail-Safe-Feder, wird über den Elektromagneten in einem vorgespannten Zustand gehalten. Für eine gute magnetische Haltekraft ist eine plane Anlage zwischen dem Magnetanker und dem eigentlichen Magneten erforderlich. Spalte oder auch eine unsymmetrische Krafteinleitung verringern die tatsächlich im System zur Verfügung stehende Haltekraft erheblich.

Um auch unter Berücksichtigung von Toleranzen eine plane Anlage bzw. Magnetanlage zwischen Magnetanker und Elektromagnet zu erzielen, ist der Magnetanker kipp- und/oder schwenkbar an einem Schwenkteil der Halteeinrichtung gelagert. Es kann sich beispielsweise um eine Art kardanische oder "halb-kardanische" Lagerung handeln. Auf diese Weise wird die Magnetanlage, d.h. die magnetische Kontaktierung zwischen Magnetanker und Elektromagnet deutlich verbessert.

Aufgrund der erfindungsgemäßen Ausgestaltung des Aktuators wird die zum Halten des Federelements in einem vorgespannten Zustand notwendige magnetische Haltekraft nicht nur aufgrund einer verbesserten Magnetanlage sondern auch hinsichtlich Bauraum, Kupfermenge und elektrischer Leistung effizient sichergestellt.

Erfindungsgemäß weist das Schwenkteil einen Halterahmen auf, in welchen der Magnetanker eingesetzt ist, wobei der Halterahmen kipp- oder schwenkbar um eine erste Kipp- oder Schwenkachse X an dem bewegbaren Schwenkteil angeordnet ist. Auf diese Weise ist eine effiziente und kostengünstig herzustellende Kipp- und/oder Schwenk-Funktion um die erste Kipp- oder Schwenkachse, beispielsweise in einer Kunststoffumspritzung des Halterahmens gewährleistet.

Erfindungsgemäß ist die Schwenk- oder Kippbarkeit des Halterahmens durch eine Materialausformung, vorliegend durch eine verjüngte Wandstärke zwischen dem bewegbaren Schwenkteil und dem Halterahmen ausgebildet. Auf diese Weise entstehen beim Schwenken oder Kippen des Halterahmens Scher- oder Torsionsspannungen, die mit dem von außen angebrachten Torsionsmoment im Gleichgewicht sind, ähnlich wie bei einem Torsions- oder Drehstab. Die Anbindungsgeometrien, in denen der Halterahmen mit dem Schwenkteil verbunden wird, weist in Belastungsrichtung das erforderliche Widerstandsmoment auf, so dass den Systemanforderungen in den Lastenheften der Automobilhersteller (OEM) Rechnung getragen wird. Das rotatorische Widerstandsmoment kann dabei weitestgehend reduziert werden, so dass eine Verdrehung des Halterahmens in den Anbindungsgeometrien mit geringer Kraft erreicht werden kann.

In einer weiteren vorteilhaften Ausgestaltung der Erfindung weist der Halterahmen diametral zueinander angeordnete Aufnahmetaschen auf, in welche der Magnetanker mittels diametral angeordneten Fortsätzen einsetzbar ist, wobei die Fortsätze auf gegenüber der Oberfläche des Halterahmens vorstehenden Vorsprüngen des Halterahmens kipp- oder schwenkbar um eine zweite Kipp- oder Schwenkachse Y aufliegen.

Diese Vorsprünge des Halterahmens können zumindest teilweise kugel- oder ballförmig ausgestaltet sein, so dass die Fortsätze des Magnetankers kipp- oder schwenkbar um die zweite Kipp- oder Schwenkachse Y aufliegen. Die zu den Anbindungspunkten senkrechte zweite Kipp- oder Schwenkachse des Magnetankers wird auf im Wesentlichen balligen oder kugeligen Anlageflächen innerhalb des Halterahmens erzielt.

Der Magentanker kann in den Rahmen eingelegt und durch eine Rotationsbewegung einhergehend mit einer Clipskontur in der Sollpostion gesichert werden. Er liegt nach der Montage in Magnetrichtung auf den kugeligen oder balligen Anlageflächen auf. Der Magentanker kann sich um ein definiertes Maß auf den balligen Anlageflächen verdrehen, so dass trotz Toleranzen eine plane Anlage am Magneten und die maximale magnetische Anziehungskraft sichergestellt werden.

Der Magnetanker kann in der Endlage verclipst werden und ist dennoch beweglich angeordnet. Ferner ist der Magnetanker in den Aufnahmetaschen vor einem Herausfallen gesichert. Gemäß dieser Ausführungsform ist der Magnetanker somit um zwei Kipp- oder Schwenkachsen kipp- oder schwenkbar gelagert. Genau genommen handelt es sich um eine Art halbkardanische Lagerung.

In einer vorteilhaften Variante ist der Magnetanker mittels der Fortsätze nach Art eines Bajonett-Verschlusses durch eine Drehbewegung gegenüber den Aufnahmetaschen in dem Halterahmen festlegbar, so dass der Magnetanker auf einfache Weise sicher gehalten wird.

Gemäß einer weiteren Ausgestaltung der Erfindung erfolgt die Kipp- oder Schwenkbarkeit des Magnetankers um die zwei, vorzugsweise in einer Ebene senkrecht zueinander stehenden Kipp- bzw. Schwenkachsen X, Y, so dass der Magnetanker mit seiner Fläche bei Magnetanlage im Wesentlichen plan an der Anschlagfläche des Haltemagneten zu liegen kommt. Bei der oben erwähnten "halbkardanischen" Lagerung ist der Magnetanker parallel zur Magnetanlage um zwei vorzugsweise zueinander im Wesentlichen senkrecht stehende Achsen gelagert oder weist um die eine Achse mindestens eine gezielte Flexibilität auf, so dass eine plane Anlage des Magnetankers am Elektromagneten sichergestellt ist.

Ebenfalls denkbar ist es, dass das Schwenkteil mit Magnetanker zwischen einer durch Magnetanlage von Elektromagnet und Magnetanker gebildeten ersten Stellung zum Halten des Federelements und einer zweiten Stellung, in welcher das Federelement entspannt ist, hin und her bewegbar ist. Auf diese Weise ist es durch den Einsatz des erfindungsgemäßen Aktuators gewährleistet, dass das Federelement immer vorgespannt werden kann, bevor die P-Stufe des Automatikgetriebes des Kraftfahrzeuges verlassen wird.

Gemäß einer weiteren vorteilhaften Variante der Erfindung ist bei Magnetanlage eine plane Fläche des Magnetankers im Wesentlichen planparallel zu einer Anschlagfläche des Haltemagneten ausgerichtet oder liegt plan an der Anschlagfläche an, so dass trotz Toleranzen die maximale magnetische Anziehungskraft sichergestellt ist.

Erfindungsgemäß ist das Schwenkteil über das zweite Betätigungselement mechanisch mit dem Federelement wirkverbunden, so dass das Schwenkteil bei Magnetanlage an dem Haltemagnet das unter Aufbau einer Rückstellkraft gespannte Federelement hält.

Für eine besonders plane Magnetanlage kann der Magnetanker scheibenförmig ausgebildet sein.

Der Halterahmen und/oder das Schwenkteil können aus Kunststoff ausgebildet sein.

Gemäß einer weiteren vorteilhaften Ausgestaltung der Erfindung ist ein mittels der Antriebswelle antreibbares und drehbar gelagertes Drehelement vorgesehen, das einerseits mit einer ersten Steuerkurve, welche mit dem ersten Betätigungselement zum Betätigen der Schalteinrichtung wirkverbunden ist, und andererseits mit einer zweiten Steuerkurve zum Spannen des Federelementes ausgebildet ist.

Dazu ist das Federelement mittels des zweiten Betätigungselementes auch mit dem ersten Betätigungselement wirkverbindbar, so dass auf Grund der durch die Vorspannung des Federelementes aufgebrachte Rückstellkraft das erste Betätigungselement entlang der ersten Steuerkurve in die P-Stufe zurückführbar ist. Insbesondere kann das zweite Betätigungselement als Mitnehmer für das erste Betätigungselement ausgebildet sein.

Zum Verlassen der P-Stufe und Einlegen der unterschiedlichen Schaltstufen, beispielsweise R, N, D, ist das Drehelement mittels des Antriebes und der Antriebswelle so verdrehbar, dass die erste Steuerkurve das erste Betätigungselement auf Grund des Wirkkontaktes mit der ersten Steuerkurve bewegen kann. Eine den Aktuator und das Automatikgetriebe verbindende Schalteinrichtung, beispielsweise mit einem Schaltseilzug, ist dazu ausgebildet, die am Aktuator erzeugte Bewegung zu dem Automatikgetriebe weiterzuleiten, so dass die P-Stufe verlassen und unterschiedliche Schaltstufen, beispielsweise R, N, D eingestellt werden können.

Dazu kann die erste Steuerkurve verschiedene Steigungen für die Schaltbewegung bzw. zum Einlegen der Schaltstufen aufweisen. Die Stellkraft setzt sich dabei im Wesentlichen aus der im Getriebe erforderlichen Mindestverstellkraft zum Einlegen unterschiedlicher Schaltstufen und ggf. der Rückstellkraft des Federelementes zusammen, gegen die der Aktuator bereits beim Verlassen der P-Stufe arbeitet. Beispielsweise kann eine solche Stellkraft etwa 500N betragen. Im Falle eines Notbetriebs werden im Gegenzug das Drehelement und der Motor durch die Steigung der ersten Steuerkurve im Zusammenwirken mit den ersten und zweiten Betätigungselementen des Aktuators unter dem Einfluss der von dem Federelement aufgebrachten Federkraft zurückgedreht.

Dabei ist zum An- beziehungsweise Eingriff in die erste Steuerkurve ein erstes Eingriffselement des Betätigungselementes zum Betätigen einer Schalteinrichtung und zum An- beziehungsweise Eingriff in die zweite Steuerkurve ein zweites Eingriffselement des zweiten Betätigungselementes vorgesehen.

Um eine besonders einfache konstruktive Ausgestaltung des Drehelementes zur Verfügung zu stellen, hat es sich bewährt, dass das Drehelement als Kreisscheibe ausgebildet ist, an welcher die beiden Steuerkurven auf jeweils einer der gegenüberliegenden Flächen der Kreisscheibe angeordnet sind. Insofern können die Steuerkurven mittels der entsprechenden Eingriffselemente problemlos angeordnet werden, ohne dass störende Einflüsse der jeweils anderen Steuerkurve beziehungsweise des dazu korrespondierenden Eingriffselementes berücksichtigt werden müssen.

Sollte das Federelement beim Herausführen aus der P-Stufe einmal nicht vorgespannt sein, so ist die erste Steuerkurve derart ausgebildet, dass beim Verdrehen des Drehelementes von seiner Winkelposition 0° bis zu seiner maximalen positiven Winkelposition bei bis zu +180° das Federelement unter Aufbau einer Rückstellkraft gespannt wird. Dabei erfolgt die Vorspannung des Federelementes insbesondere direkt nach dem Verlassen der P-Stufe, sodass die sofort zur Verfügung gestellte Rückstellkraft des Federelementes ausreicht, das erste Betätigungselement wieder in die P-Stufe zurückzuführen.

In diesem Betriebsfall kann vorgesehen sein, dass das erste Betätigungselement als Mitnehmer für das zweite Betätigungselement wirkt, so dass das Federelement von dem unter der Wirkung des ersten Betätigungselementes mitgenommenen zweiten Betätigungselement unter dem Aufbau der Rückstellkraft in dessen Spannstellung geführt wird.

Dabei hat es sich weiterhin als vorteilhaft erwiesen, dass auf der Antriebswelle eine Schnecke angeordnet ist, durch welche eine Zahnradanordnung antreibbar ist, die wiederum das Drehelement antreibt. Dabei kann das Drehelement selbst Teil dieser Zahnradanordnung sein, wobei es auch möglich ist, dass die Zahnradanordnung auch aus nur einem Zahnrad besteht.

Alternativ ist es natürlich auch denkbar, dass die Zahnradanordnung aus mehreren Zahnrädern besteht, die miteinander in Wirkverbindung stehen, wobei dann ein Zahnrad als Kreisscheibe ausgebildet ist, welche die entsprechenden Steuerkurven auf ihren gegenüberliegenden Flächen aufweist.

Selbständig geschützt sein soll auch eine Vorrichtung zum Einlegen einer Parksperre eines Kraftfahrzeugautomatikgetriebes mit einem zuvor beschriebenen Aktuators.

Die erfindungsgemäße Vorrichtung zum Einlegen einer Parksperre in einem Automatikgetriebe eines Kraftfahrzeuges weist dabei einen derartigen erfindungsgemäßen Aktuator auf.

Durch den Einsatz eines erfindungsgemäßen Aktuators in einer Vorrichtung zum Einlegen einer Parksperre in einem Automatikgetriebe eines Kraftfahrzeuges ist es nunmehr gewährleistet, dass das Federelement immer vorgespannt werden kann, bevor die P-Stufe des Automatikgetriebes des Kraftfahrzeuges verlassen wird. Mittels der zweiten Steuerkurve und des zweiten Eingriffselementes des zweiten Betätigungselementes ist es nämlich nunmehr möglich, das Federelement vorzuspannen, ohne dass sich die Position des ersten Betätigungselementes ändert. Hierdurch ist es ermöglicht, das Federelement vorzuspannen, während sich das erste Betätigungselement beim Einsatz eines derartigen Aktuators in einem Kraftfahrzeug mit einem Automatikgetriebe in einer derartigen Position befindet, dass das Automatikgetriebe des Kraftfahrzeuges in der P-Stufe eingestellt ist.

Damit beim Zurückdrehen des Drehelementes aus seiner maximalen Winkelposition, bspw. bei -180°, bis 0° diese Vorspannung erhalten bleibt, ist in vorteilhafterweise die elektromagnetische Halteeinrichtung vorgesehen, mit welcher das unter Aufbau einer Rückstellkraft gespannte Federelement in seiner Position gehalten wird. Somit ist ein Spannen des Federelementes während des Einlegens verschiedener Schaltstufen aus der P-Stufe heraus nicht erforderlich, da dies schon vorab erfolgt ist.

Zudem soll selbstständig auch ein Kraftfahrzeug mittels einer solchen Vorrichtung geschützt sein, wobei das Kraftfahrzeug ein Automatikgetriebe und eine vorstehend beschriebene Vorrichtung zum Einlegen einer Parksperre des Automatikgetriebes aufweist.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen.

Dabei zeigen zum Teil schematisch:
- Figur 1:: ein in einem Gehäuse angeordnetes Ausführungsbeispiel eines erfindungsgemäßen Aktuators in einer ersten Stellung,
- Figur 2:: den Aktuator gemäß Figur 1 in einer zweiten Stellung,
- Figur 3:: den Aktuator gemäß Figur 1 in einer dritten Stellung,
- Figur 4:: eine Detailansicht des Aktuators gemäß Figur 1 mit einem Schwenkteil mit Halterahmen für einen Magnetanker in zwei Stellungen,
- Figur 5:: eine Detailansicht gemäß Figur 4 in zwei Stellungen,
- Figur 6:: den Aktuator gemäß den Figuren 1 bis 3 in einer perspektivischen Draufsicht von oben,
- Figur 7:: den Aktuator gemäß Figur 6 in einer perspektivischen Draufsicht von unten,
- Figur 8:: den Aktuator gemäß Figur 7 in einer weiteren perspektivischen Draufsicht von unten,
- Figur 9:: den Aktuator gemäß Figur 8 in einer Ansicht von unten und
- Figur 10:: den Aktuator gemäß den vorhergehenden Figuren in einer Ansicht von oben.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

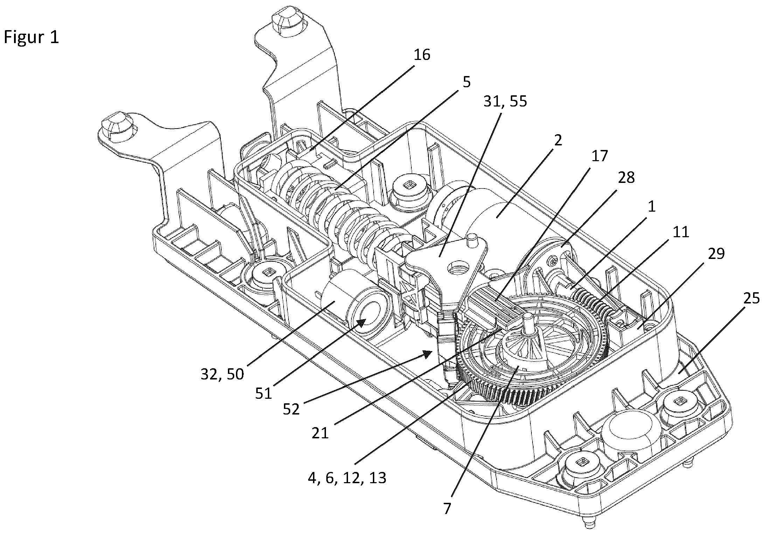

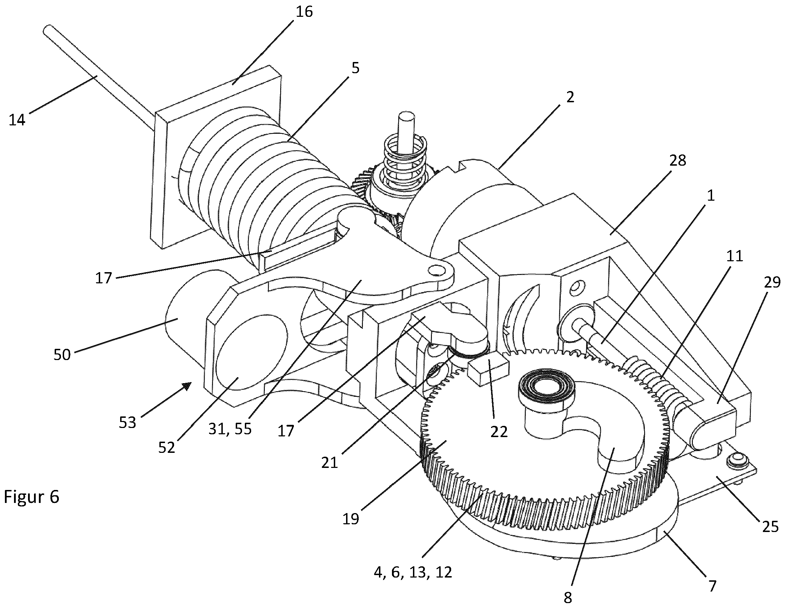

Figuren 1 bis 3 zeigen ein Ausführungsbeispiel eines in einem Gehäuse mit Gehäusedeckel und Gehäuseplatte 25 angeordneten erfindungsgemäßen Aktuators. Der Aktuator ist dabei auf der Gehäuseplatte 25 angeordnet und mit dem Gehäusedeckel abgedeckt. In den Figuren 6 bis 10 sichtbar ist noch ein Seilzug 14, mittels dem verschiedene Schaltstufen eines Automatikgetriebes eines Kraftfahrzeuges einstellbar sind. Der Seilzug 14 ist dabei in Wirkverbindung mit einem ersten Betätigungselement 3 zum Betätigen der Schalteinrichtung des Kraftfahrzeugautomatikgetriebes des Kraftfahrzeuges.

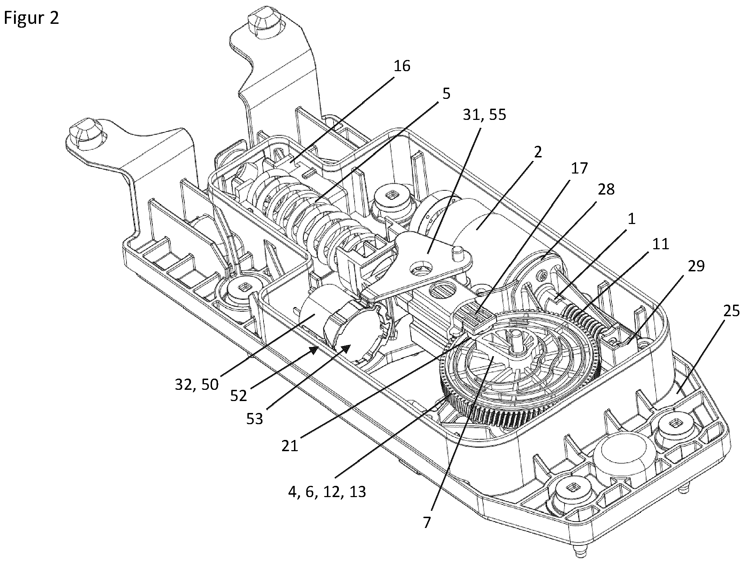

In Figur 1 bis 3 ist nunmehr ein Ausführungsbeispiel des erfindungsgemäßen Aktuators gezeigt. Deutlich zu erkennen ist hierbei das als Zahnrad 13 ausgebildete Drehelement 4, welches zudem vorliegend als Kreisscheibe 6 ausgebildet ist. Das Drehelement 4 ist dabei in seinem Mittelpunkt drehbar gelagert und weist auf seinen gegenüberliegenden Flächen 18 und 19 zwei unterschiedliche Steuerkurven 7 und 8 auf. Das Zahnrad 13, welches auch Teil einer Zahnradanordnung 12 sein kann, kämmt im vorliegenden Fall mit einer in der Figur 2 verdeckten Schnecke 11 einer Antriebswelle 1 eines Antriebes 2.

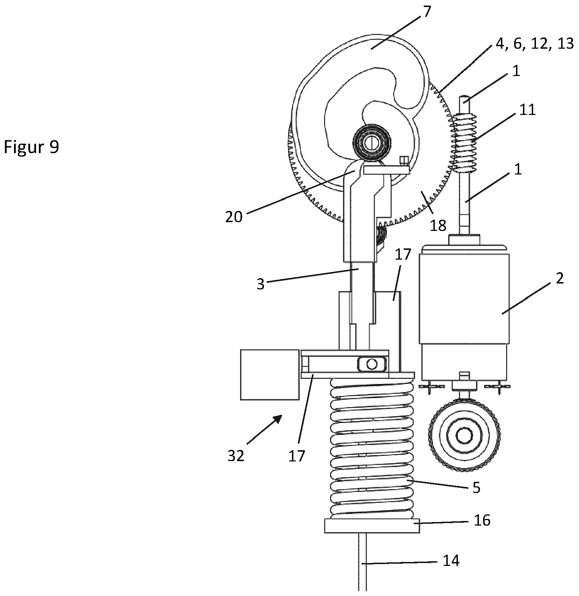

In der Figur 9 ist weiterhin das erste Betätigungselement 3 erkennbar, welches einerseits mit einem ersten Eingriffselement 20 versehen ist, welches zum Eingriff in die erste Steuerkurve 7 eingreift und anderseits mit dem Seilzug 14 einer Schalteinrichtung des Automatikgetriebes des Kraftfahrzeuges verbunden ist.

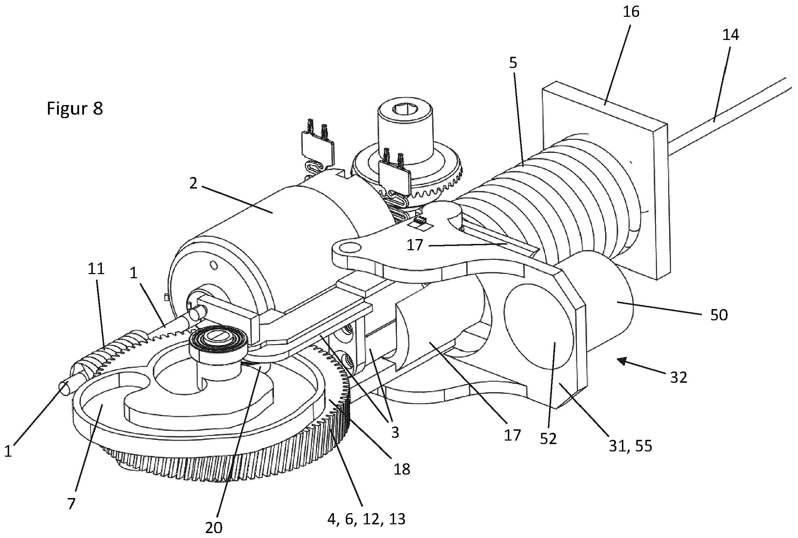

Weiterhin ist in den Figuren 8 und 9 gezeigt, dass das erste Betätigungselement 3 dabei verschiebbar in einem zweiten Betätigungselement 17 gelagert, welches einerseits mit einem zweiten Eingriffselement 21 zum Eingriff in die zweite Steuerkurve 8 versehen ist und sich andererseits an einem Federelement 5 abstützt. Innerhalb dieses zweiten Betätigungselementes 17 zum Spannen des Federelementes 5 ist weiterhin eine Bohrung angeordnet, in welcher ein Stift des ersten Betätigungselementes 3 verschiebbar gelagert ist. Der Stift ist dabei auf der dem Drehelement 4 zugewandten Seite des zweiten Betätigungselementes 17 in die Bohrung eingeführt und ist darin verschieblich. Das Betätigungselement gleitet gleichzeitig in einer parallel dazu angeordneten Bohrung des zweiten Betätigungselementes 17, über welches das erste Betätigungselement 3 mit dem Seilzug 14 verbunden ist. Der Stift und die Bohrung wirken in der Weise zusammen, dass der Stift mit seinem von dem Drehelement 4 abgewandten Ende auf dem Grund der Bohrung aufsetzen kann. In diesem Fall können Kräfte von dem ersten Betätigungselement 3 auf das zweite Betätigungselement 17 oder von dem zweiten Betätigungselement 17 auf das erste Betätigungselement 3 übertragen werden.

Solange das Federelement 5 mittels des zweiten Betätigungselementes 17 in der in Figur 2 gezeigten Spannstellung verharrt, kann das erste Betätigungselement 3 bezüglich des zweiten Betätigungselementes 17 in Richtung der Bohrung beziehungsweise in Richtung der dazu parallel angeordneten Bohrung und in Richtung des Seilzugs 14 verstellt werden, um unterschiedliche Schaltstufen des Automatikgetriebes einzulegen. Sobald der Stift mit seinem von dem Drehelement 4 abgewandten Ende auf dem Grund der Bohrung aufsetzt, wirken das erste Betätigungselement 3 und das zweite Betätigungselement 17 gegenseitig als Mitnehmer, je nach dem, in welcher Richtung die über den Grund der Bohrung und dem darauf aufsitzenden Stift übertragene Kraft wirkt.

Ferner ist in gemäß Figuren 1 bis 3 auch die Gehäuseplatte 25 dargestellt, auf der der Aktuator angeordnet ist. Weiterhin ist in der Darstellung der Figur 2 und 6 bis 10 erkennbar, dass sich das Federelement 5 einerseits an einem Gehäusebauteil 16 des Aktuators und andererseits an dem Betätigungselement 17 abstützt.

In Figur 6 und Figuren 1 bis 3 ist der Aktuator nunmehr in einer perspektivischen Ansicht von oben dargestellt. Besonders gut zu erkennen ist hierbei das als Kreisscheibe 6 und Zahnrad 13 ausgebildete Drehelement 4. In dieser Darstellung ist nun auch der Antrieb 2 mit seiner Antriebswelle 1 zu erkennen, wobei auf der Antriebswelle 1 die Schnecke 11 angeordnet ist, die mit dem Zahnrad 13 kämmt. Ferner ist hierbei ein weiteres Gehäusebauteil 28 erkennbar, welches auf der Gehäuseplatte 25 angeordnet ist und ein freies Ende 29 aufweist, in welchem die Antriebswelle 1 des Antriebs 2 drehbar gelagert beziehungsweise gehalten ist.

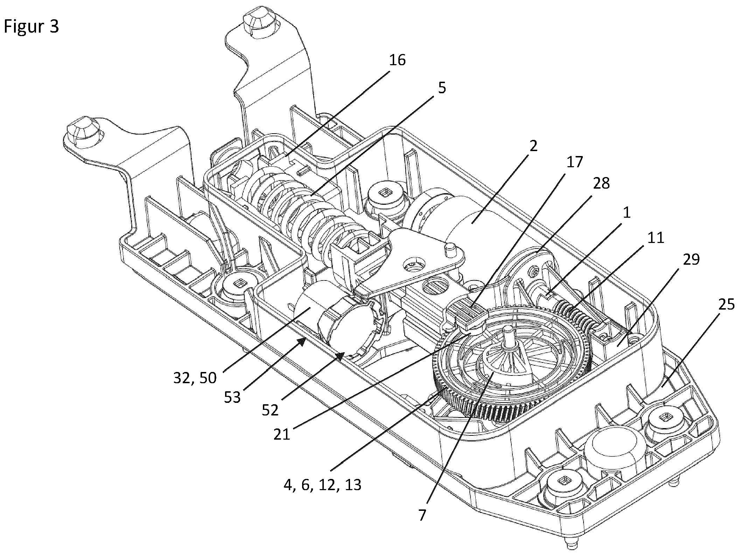

Auf der Fläche 19 des Drehelementes 4 ist dabei zum einen die zweite Steuerkurve 8 angeordnet, welche beim Verdrehen des Drehelementes 4 in Richtung seiner maximalen negativen Drehposition, also gegen den - in dieser Darstellung geltenden - Uhrzeigersinn in Eingriff bringbar ist mit dem zweiten Eingriffselement 21 des zweiten Betätigungselementes 17 zum Spannen des Federelementes 5. Dazu kommt der konvex ausgebildete Abschnitt der Steuerkurve in Anlage mit dem Eingriffselement 21, welches bei entspanntem Federelement 5 gegenüber der Darstellung in der Figur 3 in Richtung der Nabe des Drehelementes 4 verschoben wäre.

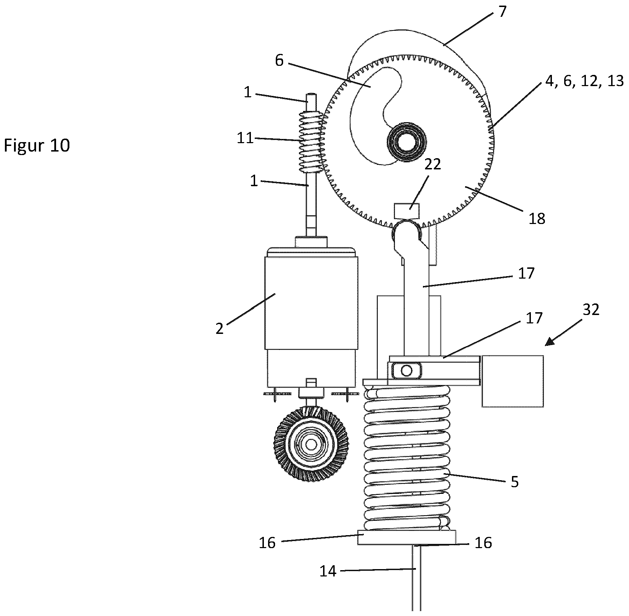

Gemäß Figuren 6 und 10 ist ferner auf der Fläche 19 ein Vorsprung 22 angeordnet, an welchem das zweite Eingriffselement 21 bei gespanntem Federelement anliegt. Im Betrieb eines Kraftfahrzeuges wird das Federelement 5, nach dem es vorgespannt wurde, mithilfe einer erfindungsgemäßen elektromagnetischen Halteeinrichtung 32 in der vorgespannten Position gehalten. In der Darstellung der Figuren 1 bis 3 ist dabei das Betätigungselement 3, welches hier verdeckt ist, in der P-Stufe des Automatikgetriebes gehalten, welches einer neutralen Winkelposition von 0° des Drehelementes entspricht. Sofern der Aktuator nun spannungsfrei ist, wird die Vorspannung des Federelementes 5 aufgrund der Anlage des Eingriffselementes 21 an dem Vorsprung 22 trotzdem aufrechterhalten, obwohl die elektromagnetische Halteeinrichtung 32 keinerlei Haltekraft mehr ausübt.

Wie die Figuren 1 bis 3 und 6 bis 10 weiter zeigen, weist die elektromagnetische Halteeinrichtung 32 einen Elektromagneten 50 auf, welcher mit einem ferromagnetische Materialkomponenten aufweisenden Magnetanker 52 zum Halten des unter Aufbau einer Rückstellkraft gespannten Federelements 5 magnetisch wechselwirkt.

Gemäß der Erfindung ist der Magnetanker 52 kipp- oder schwenkbar an einem Schwenkteil 55 der Halteeinrichtung 32 gelagert, welches Teil eines Gehäuseteils 31 sein kann. Hierzu weist das Schwenkteil 55 einen Halterahmen 54 auf, in welchen der Magnetanker 52 eingesetzt ist. Der Halterahmen 54 ist kipp- und/oder schwenkbar um eine erste Kipp- oder Schwenkachse X an dem Schwenkteil 55 angeordnet, wie insbesondere die Figuren 1 bis 3 und 4 a, b sowie 5 a, b zeigen. Das Schwenkteil 55 ist über das zweite Betätigungselement 17 mechanisch mit dem Federelement 5 wirkverbunden, so dass das Schwenkteil 55 bei einer Magnetanlage 53 an dem Elektromagnet 50 das unter Aufbau einer Rückstellkraft gespannte Federelement 5 hält. Unter Magnetanlage 53 ist eine Anlage des Magnetankers 52 am Elektromagnet 50 aufgrund der magnetischen Haltekraft zu verstehen.

Die Schwenk- oder Kippbarkeit des Halterahmens 54 ist im vorliegenden Ausführungsbeispiel durch eine Materialausformung, insbesondere durch eine verjüngte Wandstärke zwischen Schwenkteil 55 und Halterahmen 54 ausgebildet. Auf diese Weise entstehen beim Schwenken und/oder Kippen des Halterahmens Scher- oder Torsionsspannungen, die mit dem von außen angebrachten Torsionsmoment im Gleichgewicht sind, ähnlich wie bei einem Torsions- oder Drehstab. Das rotatorische Widerstandsmoment kann dabei weitestgehend reduziert werden, so dass eine Verdrehung des Halterahmens 54 in den Anbindungsgeometrien mit geringer Kraft erreicht wird.

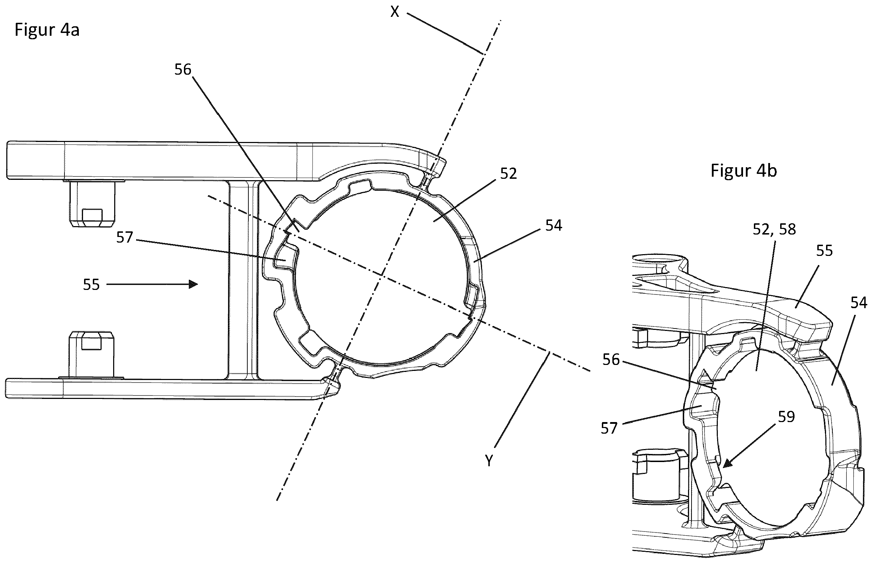

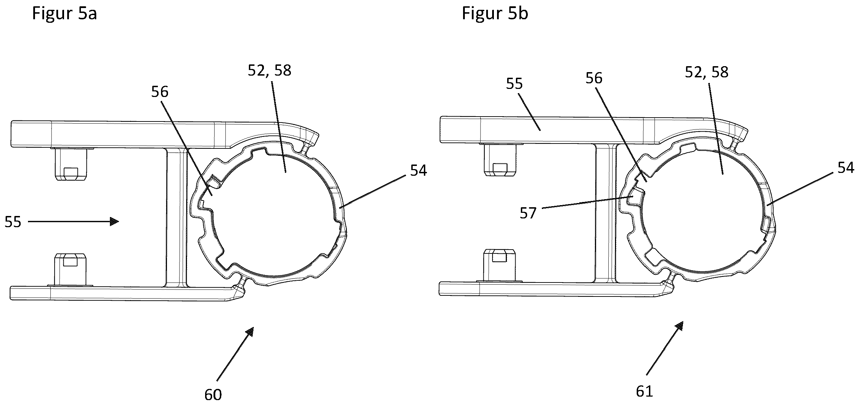

Wie die Figuren 4 und 5 weiter zeigen, ist der Magnetanker 52 mittels diametral angeordneten Fortsätzen bzw. Vorsprüngen 56 in diametral zueinander angeordnete Aufnahmetaschen 57 des Halterahmens 54 eingesetzt. Die Fortsätze 56 liegen auf gegenüber der Oberfläche des Halterahmens 54 vorstehenden Vorsprüngen 59 des Halterahmens 54 kipp- oder schwenkbar um eine zweite Kipp- oder Schwenkachse Y auf.

Im vorliegenden Ausführungsbeispiel gemäß der Figuren 4a und 4b sind die Vorsprünge 59 des Halterahmens 54 zumindest teilweise kugel- oder ballförmig ausgestaltet, so dass die Fortsätze 56 des Magnetankers 52 kipp- oder schwenkbar um die zweite Kipp- oder Schwenkachse Y aufliegen.

Mit anderen Worten wird die zu den Anbindungspunkten senkrechte zweite Kipp- oder Schwenkachse des Magnetankers 52 auf im Wesentlichen balligen oder kugeligen Anlageflächen 59 innerhalb des Halterahmens 54 erzielt.

Der Magentanker 52 kann gemäß Figur 4a in den Halterahmen eingelegt und durch eine Rotationsbewegung einhergehend mit einer Clipskontur in der Sollpostion gesichert werden. Er liegt gemäß Figur 4b nach der Montage in Magnetrichtung auf den kugeligen oder balligen Anlageflächen 59 auf. Der Magentanker 52 kann sich um ein definiertes Maß auf den balligen Auflageflächen 59 verdrehen, so dass trotz Toleranzen eine plane Anlage am Elektromagneten 50 und somit die maximale magnetische Anziehungskraft sichergestellt werden.

Um nun den Magnetanker 52 sicher am Halterahmen 54 zu halten, ist der Magnetanker 52 mittels der Fortsätze 56 nach Art eines Bajonett-Verschlusses durch eine Drehbewegung gegenüber den Aufnahmetaschen 57 in dem Halterahmen 54 festlegbar, wie Figuren 4a und 4b weiter zeigen.

Die Kipp- oder Schwenkbarkeit des Magnetankers 52 dient dazu, eine möglichst große Magnetanlage 53 zwischen Magnetanker 52 und Elektromagnet zu gewährleisten, um dadurch eine maximale magnetische Haltekraft zu realisieren. Aus diesem Grund erfolgt die Kipp- oder Schwenkbarkeit des Magnetankers 52 um die zwei, vorliegend etwa in einer Ebene senkrecht zueinander stehenden Kipp- bzw. Schwenkachsen X, Y, so dass der Magnetanker 52 mit seiner Fläche 58 bei Magnetanlage 53 im Wesentlichen plan an der Anschlagfläche 51 des Haltemagneten 50 zu liegen kommt. Mit anderen Worten liegt bei Magnetanlage 53 eine plane Fläche 58 des Magnetankers 52 im Wesentlichen plan an einer Anschlagfläche 51 des Elektromagneten 50 an.

Wie aus der Figur 5a weiter hervorgeht, ist das Schwenkteil 55 mit Magnetanker 52 zwischen einer durch die Magnetanlage 53 von Elektromagnet 50 und Magnetanker 52 gebildeten ersten Stellung 60 zum Halten des Federelements 5 und gemäß Figur 5b einer zweiten Stellung 61, in welcher das Federelement 5 entspannt ist, hin und her bewegbar.

Der Magnetanker 52 kann vorliegend scheibenförmig ausgebildet sein und der Halterahmen 54 und/oder das Schwenkteil 55 können aus Kunststoff ausgebildet sein.

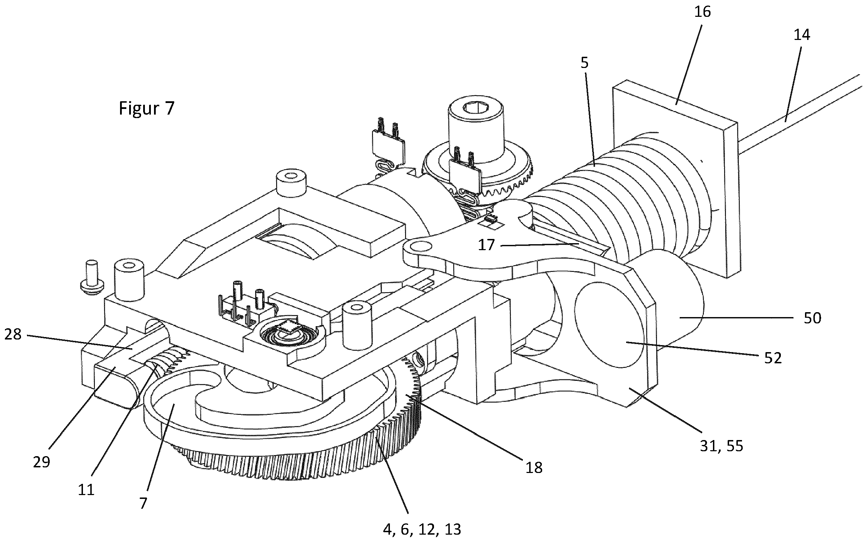

Figur 7 zeigt nunmehr den Aktuator in einer perspektivischen Ansicht von unten. Hierbei ist insbesondere besonders deutlich die erste Steuerkurve 7 erkennbar, welche auf der der Fläche 19 gegenüberliegenden Fläche 18 des Drehelementes 4 angeordnet ist. Ferner ist hierbei auch die Schnecke 11 der Antriebswelle 1 zu erkennen, welche mit dem Zahnrad 13 kämmt. Die Antriebswelle 1 ist dabei wieder in dem Ende 29 des Gehäusebauteils 28 drehbar gehalten, wobei dieses Gehäusebauteil 28 auf der Gehäuseplatte 25 angeordnet ist.

Figur 8 zeigt eine Darstellung der Figur 7 ohne die Gehäuseplatte 25. In Figur 8 ist nunmehr auch das erste Betätigungselement 3 erkennbar, welches einerseits mit dem Seilzug 14 zum Betätigen einer Schaltvorrichtung eines Automatikgetriebes verbunden und andererseits mit einem Eingriffselement 20 zum wirkverbindenden Eingriff in die Steuerkurve 7 versehen ist. Deutlich zu erkennen ist in dieser Darstellung auch, dass das erste Betätigungselement 3 verschiebbar in dem zweiten Betätigungselement 17 gelagert ist, mit welchem das Federelement 5 gespannt wird. Noch deutlicher wird diese Anordnung in der Darstellung gemäß der Figur 9, in der auf ein weiteres Gehäusebauteil 31 verzichtet wurde, in welchem die elektromagnetische Halteeinrichtung 32 gehalten ist. Die Figuren 9 und 10 dienen insbesondere dazu, die Funktionsweise des erfindungsgemäßen Aktuators zu beschreiben. Dabei befindet sich der Aktuator in diesen Darstellungen in einer Stellung, die der Stellung der P-Stufe eines Automatikgetriebes eines Kraftfahrzeuges und der neutralen Winkelposition 0° des Drehelementes 4 entspricht. Das Eingriffselement 20 des ersten Betätigungselementes 3 befindet sich wirkverbunden in Eingriff mit der ersten Steuerkurve 7, die auf der Fläche 18 des Drehelementes 4 angeordnet ist. Wird nun mittels des Antriebes 2, der Antriebswelle 1 und der Schnecke 11 das als Zahnrad 13 ausgebildete Drehelement 4 - in dieser Darstellung - gegen den Uhrzeigersinn, also in Richtung der maximalen positiven Drehpositionverdreht, so wird das Betätigungselement 3 aufgrund des Eingriffs des Eingriffselementes 20 in die Steuerkurve 7 in Richtung des Gehäusebauteils 16 bewegt, sodass sich mittels der von dem Seilzug 14 betätigten und hier nicht näher dargestellten Schalteinrichtung des Automatikgetriebes dieses aus seiner P-Stufe herausbewegt wird und unterschiedliche Schaltstufen, beispielsweise R, N, D, einstellbar sind.

Das Drehelement 4 ist dabei in seiner Drehbewegung aufgrund der Steuerkurve 7 beschränkt, sodass eine Drehung um in etwa +180° oder einen anderen Wert möglich ist. Während der Drehung des Drehelementes 4 wird dabei die Vorspannung des Federelementes 5 in dessen Spannungsstellung mithilfe der elektromagnetischen Halteeinrichtung 32 aufrechterhalten. Während der Bewegung des ersten Betätigungselementes 3 in Richtung des Gehäusebauteils 16 gleitet dessen Stift innerhalb der Bohrung in Richtung des Grunds der Bohrung.

Tritt nun während des Betriebes des Kraftfahrzeuges ein Schaden auf, infolge dessen der Aktuator spannungsfrei ist, so ist auch die elektromagnetische Halteeinrichtung 32 aufgrund der fehlenden Spannung nicht mehr in der Lage, die Federvorspannung des Federelementes 5 aufrecht zu erhalten. Unter dem Einfluss der Rückstellkraft des Federelementes 5 bewegt sich dann das zweite Betätigungselement 17 in Richtung des Drehelementes 4, so dass der dabei mit dem Grund der Bohrung in Anlage kommende Stift die Rückstellkraft des Federelementes 5 auch auf das erste Betätigungselement 3 überträgt und dieses mitnimmt. Aufgrund der Rückstellkraft des Federelementes 5 wird daher das Eingriffselement 20 des ersten Betätigungselementes 3 entlang der Steuerkurve 7 zurückgeführt und das Drehelement dabei - in dieser Darstellung im Uhrzeigersinn - von der im Maximalfall +180° Winkelposition des Drehelementes 4 der zu der ursprünglichen, neutralen Winkelposition 0° bewegt, bis das Automatikgetriebe dort wieder seine P-Stufe entsprechend Winkelposition des Drehelementes 4 eingenommen hat. Somit ist gewährleistet, dass das Automatikgetriebe auch im Schadensfall immer, insbesondere wenn das Kraftfahrzeug beziehungsweise der Aktuator spannungsfrei ist, automatisch unter Abbau der Rückstellkraft des Federelementes 4 die P-Stufe eingestellt wird.

Bei der vorliegend beschriebenen Ausführungsform ist es möglich, den Antrieb 2 in der der Rückstellbewegung entgegengesetzten Richtung anzutreiben, so dass sich das Drehelement 4 in der Figur 9 gegen den Uhrzeigersinn in Richtung der maximalen positiven Drehposition dreht. Auf diese Weise kann bewirkt werden, dass die Steuerkurve 7 mittels des Eingriffselementes 20 das Betätigungselement 3 in Richtung der Spannstellung des Federelementes 5, also in Richtung des Gehäusebauteils 16 zurückschiebt. Durch den Eingriff des Stiftes an dem Grund der Bohrung innerhalb des zweiten Betätigungselementes 17 wird dabei die Rückstellbewegung des ersten Betätigungselementes 3 auf das zweite Betätigungselement 17 übertragen, so dass das zweite Betätigungselement 17, mit dem das Federelement 5 in Eingriff ist, das Federelement 5 in die Spannstellung unter Aufbau der Rückstellkraft zurückstellt.

Ausgehend von der Darstellung der Figur 9 ist es natürlich auch möglich, das Drehelement 4 im Uhrzeigersinn von seiner neutralen, 0° Winkelposition in eine maximale negative Winkelposition von bis -180° zu verdrehen. Hierbei findet allerdings keine Betätigung des ersten Betätigungselementes 3 statt, da die Steuerkurve 7 derart ausgebildet ist, dass das Eingriffselement 20 des ersten Betätigungselementes 3 seine Position nicht ändert. Bei einer derartigen Verdrehung wird allerdings gemäß der Darstellung in Figur 10 die auf der anderen Fläche 19 des als Kreisscheibe 6 ausgebildeten Drehelementes 4 angeordnete Steuerkurve 8 in Eingriff mit dem zweiten Eingriffselement 21 des zweiten Betätigungselementes 17 zum Spannen des Federelementes 5 gebracht.

Nachdem das Federelement 5 entsprechend gespannt wurde, wird das Drehelement 4 nunmehr wieder in die andere Richtung zur neutralen Drehposition gedreht, bis das Eingriffselement 21 des Betätigungselementes 17 an dem Vorsprung 22 zum Liegen kommt, wobei das Drehelement 4 dabei wieder seine 0° Winkelposition einnimmt. Während dieses Verdrehens wird die Vorspannung des Federelementes 5 durch die Magnethalteeinrichtung 32 aufrechterhalten. In diesem Zustand kann das Fahrzeug nunmehr ordnungsgemäß abgestellt werden, wobei der Aktuator natürlich auch spannungsfrei wird. Aufgrund des Vorsprungs 22 wird allerdings die Vorspannung des Federelementes 5 auch ohne eine Spannung aufrechterhalten.

### Bezugszeichenliste

- 1: Antriebswelle
- 2: Antrieb
- 3: Betätigungselement
- 4: Drehelement
- 5: Federelement
- 6: Kreisscheibe
- 7: erste Steuerkurve
- 8: zweite Steuerkurve
- 11: Schnecke
- 12: Zahnradanordnung
- 13: Zahnrad
- 14: Seilzug
- 16: Gehäusebauteil
- 17: zweites Betätigungselement
- 18: Fläche
- 19: Fläche
- 20: erstes Eingriffselement
- 21: zweites Eingriffselement
- 22: Vorsprung
- 25: Gehäuseplatte
- 28: Gehäusebauteil
- 29: freies Ende
- 31: Gehäusebauteil
- 32: elektromagnetische Halteeinrichtung
- 50: Elektromagnet
- 51: Anschlagfläche
- 52: Magnetanker
- 53: Magnetanlage
- 54: Halterahmen
- 55: Schwenkteil
- 56: Fortsätze bzw. Vorsprünge
- 57: Aufnahmetaschen
- 58: plane Fläche Magnetanker
- 59: kugel- oder ballförmige Auflageflächen, Vorsprünge
- 60: erste Stellung
- 61: zweite Stellung

- X: erste Kipp- oder Schwenkachse
- Y: zweite Kipp- oder Schwenkachse

## Patentansprüche

1. Aktuator mit
einem eine Antriebswelle (1) antreibenden Antrieb (2),
einem mit der Antriebswelle (1) in Wirkverbindung stehenden ersten Betätigungselement (3) zum Betätigen einer Schalteinrichtung eines Kraftfahrzeugautomatikgetriebes,
einem Federelement (5), welches sich einerseits an einem Gehäusebauteil (16) des Aktuators und anderseits an einem zum Spannen des Federelementes (5) ausgebildeten zweiten Betätigungselement (17) abstützt, und mit einer elektromagnetischen Halteeinrichtung (32) mit einem Elektromagneten (50), welcher mit einem ferromagnetische Materialkomponenten aufweisenden Magnetanker (52) zum Halten des unter Aufbau einer Rückstellkraft gespannten Federelements (5) magnetisch wechselwirkt, wobei der Magnetanker (52) kipp- oder schwenkbar an einem bewegbaren Schwenkteil (55) der Halteeinrichtung (32) gelagert ist, wobei das bewegbare Schwenkteil (55) über das zweite Betätigungselement (17) mechanisch mit dem Federelement (5) wirkverbunden ist, so dass das bewegbare Schwenkteil (55) bei Magnetanlage (53) an dem Elektromagnet (50) das unter Aufbau einer Rückstellkraft gespannte Federelement (5) hält, **dadurch gekennzeichnet, dass** das bewegbare Schwenkteil (55) einen Halterahmen (54) aufweist, in welchen der Magnetanker (52) eingesetzt ist, wobei der Halterahmen (54) kipp- oder schwenkbar um eine erste Kipp- oder Schwenkachse (X) an dem bewegbaren Schwenkteil (55) angeordnet ist und die Schwenk- oder Kippbarkeit des Halterahmens (54) durch eine verjüngte Wandstärke zwischen dem bewegbaren Schwenkteil (55) und dem Halterahmen (54) ausgebildet ist.

2. Aktuator nach Anspruch 1, **dadurch gekennzeichnet, dass** der Halterahmen (54) diametral zueinander angeordnete Aufnahmetaschen (57) aufweist, in welche der Magnetanker (52) mittels diametral angeordneten Fortsätzen (56) einsetzbar ist, wobei die Fortsätze (56) auf gegenüber der Oberfläche des Halterahmens (54) vorstehenden Vorsprüngen (59) des Halterahmens (54) kipp- oder schwenkbar um eine zweite Kipp- oder Schwenkachse (Y) aufliegen.

3. Aktuator nach Anspruch 2, 4 , **dadurch gekennzeichnet, dass** die Vorsprünge (59) des Halterahmens (54) zumindest teilweise kugel- oder ballförmig ausgestaltet sind, so dass die Fortsätze (56) des Magnetankers (52) kipp- oder schwenkbar um die zweite Kipp- oder Schwenkachse (Y) aufliegen.

4. Aktuator nach Anspruch 2 oder 3, **dadurch gekennzeichnet, dass** der Magnetanker (52) mittels der Fortsätze (56) nach Art eines Bajonett-Verschlusses durch eine Drehbewegung gegenüber den Aufnahmetaschen (57) in dem Halterahmen (54) festlegbar ist.

5. Aktuator nach einem Ansprüche 2 + bis 4, **dadurch gekennzeichnet, dass** die Kipp- oder Schwenkbarkeit des Magnetankers (52) um die zwei, vorzugsweise in einer Ebene senkrecht zueinander stehenden Kipp- bzw. Schwenkachsen (X, Y) erfolgt, so dass der Magnetanker (52) mit seiner Fläche (58) bei Magnetanlage (53) im Wesentlichen plan an der Anschlagfläche (51) des Haltemagneten (50) zu liegen kommt.

6. Aktuator nach einem der vorherigen Ansprüche, **dadurch gekennzeichnet, dass** das Schwenkteil (55) mit Magnetanker (52) zwischen einer durch Magnetanlage (53) von Elektromagnet (50) und Magnetanker (52) gebildeten ersten Stellung (60) zum Halten des Federelements (5) und einer zweiten Stellung (61), in welcher das Federelement (5) entspannt ist, hin und her bewegbar ist.

7. Aktuator nach einem der vorherigen Ansprüche, **dadurch gekennzeichnet, dass** bei Magnetanlage (53) eine plane Fläche (58) des Magnetankers (52) im Wesentlichen planparallel zu einer Anschlagfläche (51) des Haltemagneten (50) ausgerichtet ist oder plan an der Anschlagfläche (51) anliegt.

8. Aktuator nach Anspruch 1, **dadurch gekennzeichnet, dass** der Magnetanker (52) scheibenförmig ausgebildet ist.

9. Aktuator nach einem der vorherigen Ansprüche, **dadurch gekennzeichnet, dass** der Halterahmen (54) und/oder das Schwenkteil (55) aus Kunststoff ausgebildet ist bzw. sind.

10. Aktuator nach einem der vorherigen Ansprüche, **dadurch gekennzeichnet, dass** ein mittels der Antriebswelle (1) antreibbares und drehbar gelagertes Drehelement (4) vorgesehen ist, das einerseits mit einer ersten Steuerkurve (7), welche mit dem ersten Betätigungselement (3) zum Betätigen der Schalteinrichtung wirkverbunden ist, und andererseits mit einer zweiten Steuerkurve (8) zum Spannen des Federelementes (5) ausgebildet ist.

11. Aktuator nach Anspruch 10, **dadurch gekennzeichnet, dass** zum Anbeziehungsweise Eingriff in die erste Steuerkurve (7) ein erstes Eingriffselement (20) des ersten Betätigungselementes (3) vorgesehen ist, und wobei zum Anbeziehungsweise Eingriff in die zweite Steuerkurve (8) ein zweites Eingriffselement (21) des zweiten Betätigungselementes (17) vorgesehen ist.

12. Aktuator nach einem Ansprüche 10 oder 11, **dadurch gekennzeichnet, dass** das Drehelement (4) als Kreisscheibe (6) ausgebildet ist, an welcher die beiden Steuerkurven (7, 8) auf jeweils auf einer der gegenüberliegenden Flächen (18, 19) angeordnet sind.

13. Aktuator nach einem der Ansprüche 10 bis 12, **dadurch gekennzeichnet, dass** die erste Steuerkurve (7) derart ausgestaltet ist, dass beim Verdrehen des Drehelementes (4) zwischen seiner neutralen Winkelposition von 0° und seiner maximalen positiven Winkelposition von bis zu +180° das Federelement (5) unter Aufbau einer Rückstellkraft gespannt wird.

14. Aktuator nach einem der Ansprüche 10 bis 13, **dadurch gekennzeichnet, dass** auf der Antriebswelle (1) eine Schnecke (11) angeordnet ist, durch welche über eine Zahnradanordnung (12) das Drehelement (4) antreibt.

15. Vorrichtung zum Einlegen einer Parksperre eines Kraftfahrzeugautomatikgetriebes mit einem Aktuator nach einem der Ansprüche 1 bis 14.

16. Kraftfahrzeug mit einem Automatikgetriebe und einer damit zusammenwirkenden Vorrichtung nach Anspruch 15.

## Claims

1. Actuator, having
a drive (2) driving a drive shaft (1),
a first actuating element (3), which is operatively connected to the drive shaft (1), for actuating a shifting device of a motor vehicle automatic gearbox,
a spring element (5), which is supported on one side on a housing component (16) of the actuator and on the other side on a second actuating element (17) which is designed for tensioning the spring element (5), and having an electromagnetic holding device (32) with an electromagnet (50) which magnetically interacts with a magnet armature (52), having ferromagnetic material components, for holding the spring element (5), which is tensioned building up a restoring force, wherein the magnet armature (52) is mounted tiltably or pivotably on a movable pivoting part (55) of the holding device (32), wherein the movable pivoting part (55) is operatively connected mechanically to the spring element (5) via the second actuating element (17) such that, upon magnetic contact (53) with the electromagnet (50), the movable pivoting part (55) holds the spring element (5), which is tensioned building up a restoring force, **characterized in that** the movable pivoting part (55) has a holding frame (54) into which the magnet armature (52) is inserted, wherein the holding frame (54) is arranged on the movable pivoting part (55) so as to be tiltable or pivotable about a first tilting or pivoting axis (X), and the pivotability or tiltability of the holding frame (54) is formed by a tapered wall thickness between the movable pivoting part (55) and the holding frame (54).

2. Actuator according to Claim 1, **characterized in that** the holding frame (54) has receiving pockets (57) which are arranged diametrically with respect to one another and into which the magnet armature (52) is insertable by means of diametrically arranged extensions (56), the extensions (56) resting tiltably or pivotably about a second tilting or pivoting axis (Y) on protrusions (59) of the holding frame (54), the protrusions protruding in relation to the surface of the holding frame (54).

3. Actuator according to Claim 2, **characterized in that** the protrusions (59) of the holding frame (54) are at least partially spherical or ball-shaped, and therefore the extensions (56) of the magnet armature (52) rest tiltably or pivotably about the second tilting or pivoting axis (Y).

4. Actuator according to Claim 2 or 3, **characterized in that** the magnet armature (52) can be secured in the holding frame (54) in the manner of a bayonet lock by means of the extensions (56), by a rotational movement in relation to the receiving pockets (57).

5. Actuator according to one of Claims 2 to 4, **characterized in that** the tiltability or pivotability of the magnet armature (52) takes place about the two tilting or pivoting axes (X, Y), preferably in a plane perpendicular to each other, and therefore the magnet armature (52) comes to lie with its surface (58) substantially flat against the stop surface (51) of the holding magnet (50) in the event of magnetic contact (53).

6. Actuator according to one of the preceding claims, **characterized in that** the pivoting part (55) is movable with the magnet armature (52) to and fro between a first position (60), which is formed by magnetic contact (53) of the electromagnet (50) and magnet armature (52), for holding the spring element (5), and a second position (61), in which the spring element (5) is relaxed.

7. Actuator according to one of the preceding claims, **characterized in that**, in the event of magnetic contact (53), a flat surface (58) of the magnet armature (52) is oriented substantially plane-parallel to a stop surface (51) of the holding magnet (50) or bears flat against the stop surface (51).

8. Actuator according to Claim 1, **characterized in that** the magnet armature (52) is in the shape of a disc.

9. Actuator according to one of the preceding claims, **characterized in that** the holding frame (54) and/or the pivoting part (55) are or is formed from plastic.

10. Actuator according to one of the preceding claims, **characterized in that** a rotatably mounted rotary element (4) is provided which is drivable by means of the drive shaft (1) and which, on the one hand, is formed with a first radial cam (7), which is operatively connected to the first actuating element (3) for actuating the shifting device, and, on the other hand, is formed with a second radial cam (8) for tensioning the spring element (5).

11. Actuator according to Claim 10, **characterized in that** a first engagement element (20) of the first actuating element (3) is provided for application or engagement in the first radial cam (7), and wherein a second engagement element (21) of the second actuating element (17) is provided for application or engagement in the second radial cam (8).

12. Actuator according to either of Claims 10 and 11, **characterized in that** the rotary element (4) is in the form of a circular disc (6) at which the two radial cams (7, 8) are each arranged on one of the opposite surfaces (18, 19).

13. Actuator according to one of Claims 10 to 12, **characterized in that** the first radial cam (7) is configured in such a manner that, when the rotary element (4) rotates between its neutral angular position of 0° and its maximum positive angular position of up to +180°, the spring element (5) is tensioned building up a restoring force.

14. Actuator according to one of Claims 10 to 13, **characterized in that** a worm (11) is arranged on the drive shaft (1) and is used to drive the rotary element (4) via a gearwheel arrangement (12).

15. Device for engaging a parking lock of a motor vehicle automatic gearbox with an actuator according to one of Claims 1 to 14.

16. Motor vehicle with an automatic gearbox and a device according to Claim 15 which interacts therewith.

## Revendications

1. Actionneur comprenant
un dispositif d'entraînement (2) entraînant un arbre d'entraînement (1),
un premier élément d'actionnement (3), relié fonctionnellement à l'arbre d'entraînement (1) pour actionner un dispositif de commande d'une transmission automatique de véhicule automobile,
un élément ressort (5) qui s'appuie d'une part sur un composant de boîtier (16) de l'actionneur et d'autre part sur un deuxième élément d'actionnement (17) conçu pour tendre l'élément ressort (5), et avec un dispositif de retenue électromagnétique (32) avec un électroaimant (50), qui interagit magnétiquement avec un induit magnétique (52) présentant des composants de matériau ferromagnétique pour maintenir l'élément ressort (5) tendu en développant une force de rappel, l'induit magnétique (52) étant monté de manière inclinable ou pivotante sur une partie pivotante mobile (55) du dispositif de maintien (32), la partie pivotante mobile (55) étant reliée mécaniquement de manière active à l'élément ressort (5) par l'intermédiaire du deuxième élément d'actionnement (17), de sorte que, lorsque l'aimant (53) est en contact avec l'électroaimant (50), la partie pivotante mobile (55) maintient l'élément élastique (5) tendu en développant une force de rappel, **caractérisé en ce que** la partie pivotante mobile (55) présente un châssis de maintien (54) dans lequel l'induit magnétique (52) est inséré, le châssis de maintien (54) étant agencé de manière à être apte à basculer ou pivoter autour d'un premier axe de basculement ou de pivotement (X) sur la partie pivotante mobile (55), et la capacité de pivotement ou de basculement du châssis de maintien (54) résultant d'une épaisseur de paroi diminuée entre la partie pivotante mobile (55) et le châssis de maintien (54).

2. Actionneur selon la revendication 1, **caractérisé en ce que** le châssis de maintien (54) présente des logements de réception (57) agencés diamétralement les uns par rapport aux autres, dans lesquels l'induit magnétique (52) est apte à être inséré au moyen d'extensions (56) agencées diamétralement, les extensions (56) reposant sur des saillies (59) du châssis de maintien (54) faisant saillie par rapport à la surface du châssis de maintien (54) de manière à pouvoir basculer ou pivoter autour d'un deuxième axe de basculement ou de pivotement (Y).

3. Actionneur selon la revendication 2, **caractérisé en ce que** les saillies (59) du châssis de maintien (54) sont au moins partiellement en forme de sphère ou de bille, de sorte que les extensions (56) de l'induit magnétique (52) reposent de manière à pouvoir basculer ou pivoter autour du deuxième axe de basculement ou de pivotement (Y).

4. Actionneur selon la revendication 2 ou la revendication 3, **caractérisé en ce que** l'induit magnétique (52) est apte à être fixée dans le châssis de maintien (54) au moyen des extensions (56) à la manière d'une fermeture à baïonnette par un mouvement de rotation par rapport aux logements de réception (57).

5. Actionneur selon l'une des revendications 2 à 4, **caractérisé en ce que** le basculement ou le pivotement de l'induit magnétique (52) s'effectue autour des deux axes de basculement ou de pivotement (X, Y), de préférence perpendiculaires l'un à l'autre dans un plan, de sorte que la surface (58) de l'induit magnétique (52) vient se placer sensiblement à plat contre la surface de butée (51) de l'aimant de retenue (50) lorsque l'aimant est en appui (53).

6. Actionneur selon l'une des revendications précédentes, **caractérisé en ce que** la pièce pivotante (55) avec induit magnétique (52) est apte à être déplacée en va-et-vient entre une première position (60) formée par l'application magnétique (53) de l'électroaimant (50) et de l'induit magnétique (52) pour le maintien de l'élément ressort (5) et une deuxième position (61) dans laquelle l'élément ressort (5) est détendu.

7. Actionneur selon l'une des revendications précédentes, **caractérisé en ce que**, dans le cas d'une installation magnétique (53), une surface plane (58) de l'induit magnétique (52) est orientée de manière sensiblement plane et parallèle à une surface de butée (51) de l'aimant de maintien (50) ou est en contact plan avec la surface de butée (51).

8. Actionneur selon la revendication 1, **caractérisé en ce que** l'induit magnétique (52) est en forme de disque.

9. Actionneur selon l'une des revendications précédentes, **caractérisé en ce que** le châssis de maintien (54) et/ou la pièce pivotante (55) est ou sont réalisés en matière plastique.

10. Actionneur selon l'une des revendications précédentes, **caractérisé en ce qu'**il est prévu un élément rotatif (4) aptes à être entraîné et monté de manière rotative au moyen de l'arbre d'entraînement (1), qui est réalisé d'une part avec une première came de commande (7), qui est reliée fonctionnellement au premier élément d'actionnement (3) pour l'actionnement du dispositif de commutation, et d'autre part avec une deuxième came de commande (8) pour la mise sous tension de l'élément à ressort (5).

11. Actionneur selon la revendication 10, **caractérisé en ce qu'**un premier élément d'engagement (20) du premier élément d'actionnement (3) est prévu pour l'application ou l'engagement dans la première came de commande (7), et un deuxième élément d'engagement (21) du deuxième élément d'actionnement (17) est prévu pour l'application ou l'engagement dans la deuxième came de commande (8).

12. Actionneur selon l'une des revendications 10 ou 11, **caractérisé en ce que** l'élément rotatif (4) est réalisé sous la forme d'un disque circulaire (6) sur lequel les deux cames de commande (7, 8) sont agencées chacune sur l'une des surfaces opposées (18, 19).

13. Actionneur selon l'une des revendications 10 à 12, **caractérisé en ce que** la première came de commande (7) est conçue de telle sorte que, lors de la rotation de l'élément rotatif (4) entre sa position angulaire neutre de 0° et sa position angulaire positive maximale allant jusqu'à +180°, l'élément élastique (5) soit tendu en développant une force de rappel.

14. Actionneur selon l'une des revendications 10 à 13, **caractérisé en ce qu'**une vis sans fin (11) est agencée sur l'arbre d'entraînement (1), par laquelle l'élément rotatif (4) est entraîné par l'intermédiaire d'un agencement de roues dentées (12).

15. Dispositif d'enclenchement d'un frein de parking d'une transmission automatique de véhicule automobile comportant un actionneur selon l'une des revendications 1 à 14.

16. Véhicule automobile équipé d'une transmission automatique et d'un dispositif coopérant avec celle-ci selon la revendication 15.
